# FASCICULE DE BREVET EUROPEEN

(11) **EP 4 448 366 B1**
(45) Date de publication et mention de la délivrance du brevet: **12.08.2026**
(21) Numéro de dépôt: 22834684.7
(22) Date de dépôt: 16.11.2022
(51) Int. Cl.: B60W 60/00, B60W 50/08, B60W 50/14, B60W 30/12, B60W 30/14, B60W 50/16, B60W 50/00

(54) **SYSTÈMES POUR LA DÉTECTION D'UN CHANGEMENT DU TYPE DE ROUTE**
SYSTEME ZUR ERKENNUNG EINER ÄNDERUNG DES STRASSENTYPS
SYSTEMS FOR DETECTING A CHANGE IN ROAD TYPE

(30) Priorité: 13.12.2021 FR 2113382
(43) Date de publication de la demande: 23.10.2024
(73) Titulaire: Stellantis Auto SAS, 78300 Poissy (FR)
(72) Inventeur: ET-THAQFY, Yassine, Casablanca, 20620 (MA); EL HANBALI, Hamza, Casablanca, 20580 (MA); LAHLOU, Zoubida, Casablanca, 20190 (MA)
(74) Mandataire: ESIP
(86) Numéro de dépôt international: PCT/FR2022/052099
(87) Numéro de publication internationale: WO 2023/111411

(56) Documents cités:
- EP-A1- 2 915 718
- FR-A1- 2 947 231
- US-A1- 2019 056 732

## Description

La présente invention a trait aux fonctions d'aide à la conduite ou de conduite automatique d'un véhicule automobile convenables à une circulation sur un type particulier de route, et plus particulièrement aux méthodes et systèmes permettant une utilisation appropriée de ces fonctions au regard d'un changement du type de route sur lequel évolue un véhicule automobile.

Les systèmes d'aide à la conduite ou de conduite autonome sont configurés pour contrôler la vitesse et/ou la position du véhicule automobile dans une voie de circulation de la route. Pour cela, ces systèmes utilisent des données de perception fournies par des capteurs embarqués (tels que des caméras, des radars, des lidars ou des modules de communication véhiculaire) et/ou des données cartographiques fournies par un dispositif de navigation. Ces données comprennent, entre autres, le type de route empruntée par le véhicule automobile. Certaines fonctions d'aide à la conduite ou de conduite autonome sont, en effet, adaptées uniquement à une circulation sur un type particulier de route, notamment une route du type voie rapide ou autoroute.

Les documents US2019/056732, EP2915718 et FR2947231 décrivent des systèmes permettant d'évaluer des situations routières d'un véhicule.

Cependant, les approches actuelles de détection d'un changement du type de route sur lequel évolue un véhicule automobile ne sont pas exemptes d'inconvénients.

La détection d'une évolution sur le type de route au moyen d'une caméra frontale est fortement limitée par la portée de vue de cette dernière qui, dans des conditions climatiques, de luminosité ou de circulation défavorables, peut encore être réduite. De façon générale, une détection d'un changement du type de route par des moyens de perception de l'environnement du véhicule automobile (tels qu'un panneau de signalisation routière de fin d'autoroute ou des marquages au sol) peut être mise en défaut par certaines circonstances atmosphériques (un brouillard par exemple) et/ou lorsque les capteurs utilisés sont occultés, par exemple à cause de la présence d'autres véhicules.

De même, une correspondance imparfaite entre les données cartographiques de la route et l'emplacement réel du véhicule automobile pourrait amener à permettre l'activation ou le maintien d'une fonction d'aide à la conduite ou de conduite autonome sur un tronçon de route qui ne convient pas à cette fonction.

Plus généralement, la non-détection ou une détection tardive d'une évolution sur le type de route sur lequel évolue le véhicule automobile peut conduire à une utilisation inappropriée des fonctions d'aide à la conduite ou de conduite autonome de façon à mettre en danger la sécurité du conducteur et celle des autres usagers de la route.

Un objet de la présente invention est de pallier au moins en partie les inconvénients précités.

A cet effet, il est proposé, en premier lieu, un système pour détecter un changement du type de route sur lequel évolue un véhicule automobile, ce système comprenant :
- un dispositif d'aide à la conduite apte à contrôler au moins partiellement le déplacement du véhicule automobile, ce dispositif d'aide à la conduite étant associé à un premier type de route;
- un dispositif de navigation apte à fournir, pour une position du véhicule automobile sur une route, des données comprenant un type de route en un premier point et en un deuxième point de la route en aval du véhicule automobile par rapport au sens de déplacement dudit véhicule automobile, le premier point étant plus proche, en suivant le tracé de la route, du véhicule automobile que le deuxième point ;
- un calculateur configuré pour détecter, dans les données fournies par le dispositif de navigation, un changement du type de route du premier type de route au premier point à un deuxième type de route au deuxième point;
- le calculateur étant, en outre, configuré pour générer, lorsque ce calculateur détecte ledit changement, une alerte préventive de désactivation du dispositif d'aide à la conduite lorsque le véhicule automobile se trouve dans un tronçon de route de longueur prédéfinie en amont, par rapport au sens de déplacement du véhicule automobile, du deuxième point ;
- la distance entre le véhicule automobile et le premier point est associée au premier type de route, à la limitation de vitesse applicable à la position du véhicule automobile, et/ou à la vitesse de déplacement du véhicule automobile.

Diverses caractéristiques supplémentaires peuvent être prévues, seules ou en combinaison :
- la longueur dudit tronçon de route est associée à une limitation de vitesse applicable à la position du véhicule automobile, à la vitesse de déplacement du véhicule automobile, au premier type de route, à des données relatives au véhicule automobile, et/ou à des données relatives à des conditions climatiques au premier point et/ou au deuxième point de la route ;
- la distance entre le premier point et le deuxième point est associée au type de route, à une limitation de vitesse applicable à la position du véhicule automobile, et/ou à la vitesse de déplacement du véhicule automobile ;
- le tronçon de route est au moins partiellement du premier type de route ;
- l'alerte préventive comprend une invitation à reprendre une conduite manuelle du véhicule automobile ;
- l'alerte préventive comprend une distance restante à parcourir dans le tronçon de route et/ou une distance restante à parcourir pour aborder le deuxième point de la route.

Il est proposé, en deuxième lieu, un véhicule automobile comprenant le système présenté ci-dessus.

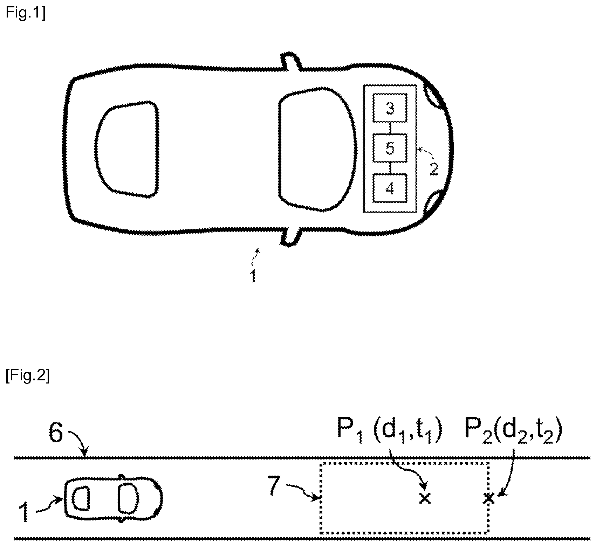

D'autres caractéristiques et avantages de l'invention apparaîtront plus clairement et de manière concrète à la lecture de la description ci-après de modes de réalisation, laquelle est faite en référence aux dessins annexés dans lesquels :
la figure [Fig.1] illustre schématiquement un véhicule automobile pourvu d'un système pour la détection d'un changement du type de route sur lequel circule ce véhicule automobile selon divers modes de réalisation;
la figure [Fig.2] illustre schématiquement une utilisation du système précité selon divers modes de réalisation.

En se référant aux figures annexées, il est affiché un véhicule 1 automobile comprenant un système 2 pour la détection d'un changement du type de route sur lequel évolue ce véhicule 1 automobile.

Le système 2 comprend un dispositif 3 d'aide à la conduite apte à contrôler au moins partiellement le déplacement du véhicule 1 automobile (sa vitesse et/ou sa position dans une voie de la route 6). Autrement dit, ce dispositif 3 d'aide à la conduite permet une délégation au moins partielle de la conduite du véhicule 1 automobile. Cette délégation de conduite peut aller d'une assistance à la conduite en libérant le conducteur d'une ou plusieurs tâches (conduite semi-automatique), jusqu'à une automatisation complète de la conduite (véhicule autonome). A titre d'exemples non-limitatifs, le dispositif 3 d'aide à la conduite comprend un régulateur de vitesse adaptatif, un assistant au positionnement dans la voie, un assistant de changement de voie, un dispositif de changement automatique de voie, un limiteur de vitesse, un dispositif d'avertissement de franchissement de ligne, un dispositif de stationnement automatique et/ou un assistant de vitesse intelligent.

Le dispositif 3 d'aide à la conduite est, dans un mode de réalisation, associé à au moins un type prédéfini de route, tel qu'une route à accès réglementé, une voie rapide (ou voie expresse), une route départementale, une route nationale, une route fédérale, une semi-autoroute, ou une autoroute. Un dispositif 3 d'aide à la conduite est, en effet, souvent destiné à une utilisation sur une route 6 de type prédéfini. Par exemple, un dispositif d'aide au maintien dans la voie, un dispositif de changement automatique de voie et/ou un régulateur de vitesse automatique sont configurés et appropriés pour une utilisation sur autoroute.

Le système 2 comprend, en outre, un dispositif 4 de navigation (tel que E-Horizon) apte à fournir, pour une position du véhicule 1 automobile sur la route 6, des données comprenant un type de route au moins en un premier point P₁ et en un deuxième point **P₂** de la route 6 en aval du véhicule 1 automobile par rapport à son sens de déplacement. Le premier point **P₁** est plus proche, en suivant le tracé de la route 6, du véhicule 1 automobile que le deuxième point **P₂**.

Pour cela, le dispositif 4 de navigation est, dans un mode de réalisation, pourvu d'une carte numérique d'un réseau routier (c.à.d. une cartographie du réseau routier) intégrant la route 6 empruntée par le véhicule 1 automobile et d'un module de localisation (ou de géo-positionnement) permettant de déterminer la position géographique du véhicule 1 automobile. Le dispositif 4 de navigation est, ainsi, apte à localiser le véhicule 1 automobile sur la route 6.

Plus généralement, le dispositif 4 de navigation récupère des données cartographiques à partir d'une carte numérique d'un réseau routier associée à un module de localisation (de type GPS, GLONASS, GALILEO, ou BeiDou) permettant de positionner le véhicule 1 automobile dans cette carte. Les données cartographiques récupérées comprennent, entre autres, le type de route sur lequel progresse le véhicule 1 automobile à aux moins deux distances **d₁**, **d₂** à parcourir croissantes séparant la position du véhicule 1 automobile de deux points **P₁**, **P₂** de la route 6 devant ce véhicule 1 automobile.

Dans un mode de réalisation, les données fournies par le dispositif 4 de navigation comprennent
- un premier vecteur de distances à parcourir intégrant au moins une première distance **d₁** et une deuxième distance **d₂** croissantes (c.à.d. **d₁**<**d₂**) séparant la position du véhicule 1 automobile, respectivement, d'un premier point **P₁** et d'un deuxième point **P₂** de la route 6 en aval du véhicule 1 automobile par rapport à son sens de déplacement; et
- un deuxième vecteur de types de route **t₁**, **t₂** aux points **P₁**, **P₂**.

Les données fournies par le dispositif 4 de navigation comprennent, en effet, une pluralité de couples (distance à parcourir, type de route) relatifs à une pluralité de points de la route 6 devant le véhicule 1 automobile. La distance à parcourir est une distance curviligne suivant le tracé de la route 6. Avec le déplacement du véhicule 1 automobile, les données fournies par le dispositif 4 de navigation sont sous forme de deux flux, un premier flux de distances curvilignes à parcourir séparant la position du véhicule 1 automobile d'une pluralité de points successifs de la route 6 devant le véhicule 1 automobile et un deuxième flux de types de route en ces points.

La première distance **d₁** et/ou la distance entre le premier point **P₁** et le deuxième point **P₂** sont, dans un mode de réalisation, associées à (c.à.d. choisies en fonction de) la limitation de vitesse applicable à la position du véhicule 1 automobile, à la vitesse de déplacement du véhicule 1 automobile, au type de route à la position du véhicule 1 automobile, à des données relatives au véhicule 1 automobile (son type tel que utilitaire, camion, ou tout-terrain, ses performances de freinage, sa charge ou s'il tracte une remorque), à des données relatives à des conditions climatiques aux points **P₁**, **P₂** de la route 6 (forte pluie, vent, visibilité insuffisante, verglas par exemple), et/ou à des préférences utilisateur. Ceci permet avantageusement de moduler la distance **d₁** et/ou la distance entre les deux points **P₁**, **P₂** de la route 6 devant le véhicule 1 automobile en fonction des conditions de roulage du véhicule 1 automobile.

Un calculateur 5 du système 2 est configuré pour détecter, dans les données fournies par le dispositif 4 de navigation, un changement du type de route d'un premier type de route **t₁** au premier point **P₁** à un deuxième type de route **t₂** au deuxième point **P₂,** le dispositif 3 d'aide à la conduite étant associé au premier type de route **t₁**. Un tel changement indique la fin du premier type de route **t₁** (ou, de manière équivalente, le début du deuxième type de route **t₂**). Ainsi, le calculateur **5** est apte à détecter, par exemple, la fin prochaine d'une autoroute sur laquelle progresse le véhicule **1** automobile.

Lorsqu'il détecte un changement du type de route d'un premier type de route **t₁** associé au dispositif **3** d'aide à la conduite à un autre type de route **t₂** non-associé au dispositif **3** d'aide à la conduite, le calculateur **5** génère une alerte préventive de désactivation du dispositif **3** d'aide à la conduite lorsque le véhicule **1** automobile se trouve dans un tronçon **7** de route de longueur prédéfinie en amont, par rapport au sens de déplacement du véhicule **1** automobile, du deuxième point **P₂**. A titre d'exemple, le système **2** détecte la fin d'une autoroute et définit avant la fin de cette autoroute un tronçon **7** de route dans lequel le conducteur est alerté de la désactivation du dispositif **3** d'aide à la conduite.

La longueur du tronçon **7** de route est, dans un mode de réalisation, associée (par exemple, modulée de façon proportionnelle) à une limitation de vitesse applicable à la position du véhicule **1** automobile, à la vitesse de déplacement du véhicule **1** automobile, au type de route **t₁** au point **P₁** de la route **6,** à des données relatives au véhicule **1** automobile (son type tel que utilitaire, camion, ou tout-terrain, ses performances de freinage, sa charge ou s'il tracte une remorque), et/ou à des données relatives à des conditions climatiques aux points **P₁** et/ou **P₂** de la route **6** (forte pluie, vent, visibilité insuffisante, verglas par exemple).

Plus généralement, la longueur du tronçon **7** de route est choisie de façon à laisser une durée suffisante au dispositif 3 d'aide à la conduite pour réagir (par exemple, décélérer, freiner ou repositionner le véhicule 1 automobile dans la voie) et/ou au conducteur pour qu'il soit en mesure de reprendre le contrôle du véhicule 1 automobile. Le tronçon 7 de route est au moins partiellement du premier type de route **t₁** auquel est associé le dispositif 3 d'aide à la conduite. Le tronçon 7 de route mène au point **P₂**. Le tronçon 7 de route est construit en partant du point **P₂** et en s'en éloignant progressivement dans le sens inverse du sens de circulation du véhicule 1 automobile jusqu'à une longueur prédéfinie.

Le tronçon **7** de route constitue une zone d'anticipation d'une désactivation du dispositif **3** d'aide à la conduite. Une désactivation du dispositif **3** d'aide à la conduite lorsque le véhicule **1** automobile se trouve dans le tronçon **7** de route permet, avantageusement, d'anticiper au bon moment une inadéquation à venir du type de route avec le dispositif **3** d'aide à la conduite. Le calculateur **5** détecte la fin prochaine du type de route **t₁** auquel est associé le dispositif **3** d'aide à la conduite et anticipe, en conséquence, la désactivation de ce dispositif **3** d'aide à la conduite à partir du tronçon **7** de route.

Le calculateur **5** considère qu'une utilisation du dispositif **3** d'aide à la conduite sur un type de route **t₂** qui ne lui est pas associé est inappropriée et, de ce fait, désactive ou empêche l'utilisation de ce dispositif **3** d'aide à la conduite sur ce type de route **t₂** à partir, le cas échéant, du tronçon **7** de route. Il en résulte, avantageusement, que le calculateur **5** permet de déterminer s'il est pertinent de maintenir le dispositif **3** d'aide à la conduite dans l'état opérationnel ou de permettre son utilisation compte tenu du type de route devant le véhicule **1** automobile.

Le calculateur **5** génère (ou déclenche) l'alerte préventive à l'attention du conducteur sous la forme d'un signal sonore, et/ou visuel et/ou par vibration dans le volant par exemple.

Dans un mode de réalisation, une confirmation par le conducteur du véhicule **1** automobile de la désactivation du dispositif **3** d'aide à la conduite à partir du tronçon **7** de route est requise. Pour cela, le système **2** comporte des moyens (un clavier, un clavier tactile ou un micro par exemples ou, plus généralement, tout moyen d'entrée de données) aptes à permettre au conducteur de valider la désactivation du dispositif **3** d'aide à la conduite.

Dans un autre mode de réalisation, l'alerte préventive comprend une invitation au conducteur à reprendre la conduite manuelle du véhicule **1** automobile. Autrement dit, le calculateur **5** demande au conducteur de reprendre en main la conduite du véhicule **1** automobile avant qu'il n'aborde le nouveau type de route (une requête de transition d'un mode de conduite automatique ou semi-automatique vers un mode de conduite manuelle).

L'alerte préventive émise à l'attention du conducteur comprend, dans un mode de réalisation, des informations permettent d'anticiper la désactivation du dispositif **3** d'aide à la conduite et la situation de roulage à venir du véhicule **1** automobile telle que la distance restante à parcourir dans le tronçon **7** de route, et/ou la distance restante à parcourir pour aborder le point **P₂** de la route **6.**

Avantageusement, les modes de réalisation décrits ci-dessus du système **2** permettent de détecter tout changement du type de route que le véhicule **1** automobile va rencontrer et d'adapter en conséquence la gestion des dispositifs d'aide à la conduite équipant ce véhicule **1** automobile. Il en résulte une amélioration de la sécurité d'utilisation des dispositifs d'aide à la conduite.

## Revendications

1. Système **(2)** pour détecter un changement du type de route sur lequel évolue un véhicule **(1)** automobile, ce système **(2)** comprenant :
- un dispositif **(3)** d'aide à la conduite apte à contrôler au moins partiellement le déplacement du véhicule **(1)** automobile, ce dispositif **(3)** d'aide à la conduite étant associé à un premier type de route **(6);**
- un dispositif **(4)** de navigation apte à fournir, pour une position du véhicule **(1)** automobile sur une route **(6),** des données comprenant un type de route **(6)** en un premier point (**P₁**) et en un deuxième point (**P₂**) de la route **(6)** en aval du véhicule **(1)** automobile par rapport au sens de déplacement dudit véhicule automobile, le premier point (**P₁**) étant plus proche, en suivant le tracé de la route **(6),** du véhicule **(1)** automobile que le deuxième point (**P₂**);
- un calculateur **(5)** configuré pour détecter, dans les données fournies par le dispositif **(4)** de navigation, un changement du type de route du premier type de route (**t₁**) au premier point (**P₁**) à un deuxième type de route (**t₂**) au deuxième point (**P₂**) ;
- le calculateur étant, en outre, configuré pour générer, lorsque ce calculateur **(5)** détecte ledit changement, une alerte préventive de désactivation du dispositif **(3)** d'aide à la conduite lorsque le véhicule **(1)** automobile se trouve dans un tronçon **(7)** de route de longueur prédéfinie en amont, par rapport au sens de déplacement du véhicule **(1)** automobile, du deuxième point (**P₂**),
dans lequel la distance entre le véhicule **(1)** automobile et le premier point (**P₁**) est associée au premier type de route (**t₁**), à une limitation de vitesse applicable à la position du véhicule **(1)** automobile, et/ou à la vitesse de déplacement du véhicule **(1)** automobile.

2. Système **(2)** selon la revendication précédente, **caractérisé en ce que** la longueur dudit tronçon **(7)** de route est associée à une limitation de vitesse applicable à la position du véhicule **(1)** automobile, à la vitesse de déplacement du véhicule **(1)** automobile, au premier type de route (**t₁**), à des données relatives au véhicule **(1)** automobile, et/ou à des données relatives à des conditions climatiques au premier point (**P₁**) et/ou au deuxième point (**P₂**) de la route **(6).**

3. Système **(2)** selon l'une quelconque des revendications précédentes, **caractérisé en ce que** la distance entre le premier point (**P₁**) et le deuxième point (**P₂**) est associée au premier type de route (**t₁**), à une limitation de vitesse applicable à la position du véhicule **(1)** automobile, et/ou à la vitesse de déplacement du véhicule **(1)** automobile.

4. Système **(2)** selon l'une quelconque des revendications précédentes, **caractérisé en ce que** le tronçon **(7)** de route est au moins partiellement du premier type de route (**t₁**).

5. Système **(2)** selon l'une quelconque des revendications précédentes, **caractérisé en ce que** l'alerte préventive comprend une invitation à reprendre une conduite manuelle du véhicule **(1)** automobile.

6. Système **(2)** selon l'une quelconque des revendications précédentes, **caractérisé en ce que** l'alerte préventive comprend une distance restante à parcourir dans le tronçon **(7)** de route et/ou une distance restante à parcourir pour aborder le deuxième point (**P₂**) de la route **(6).**

7. Véhicule **(1)** automobile comprenant le système **(2)** d'alerte préventive de l'une quelconque des revendications précédentes.

## Patentansprüche

1. System (2) zum Erfassen einer Änderung des Streckentyps, auf dem ein Kraftfahrzeug (1) fährt, wobei dieses System (2) umfasst:
- eine Fahrhilfsvorrichtung (3), die in der Lage ist, die Bewegung des Kraftfahrzeugs (1) zumindest teilweise zu steuern, wobei diese Fahrhilfsvorrichtung (3) einem ersten Streckentyp (6) zugeordnet ist;
- eine Navigationsvorrichtung (4), die in der Lage ist, für eine Position des Kraftfahrzeugs (1) auf einer Strecke (6) Daten bereitzustellen, die einen Streckentyp (6) an einem ersten Punkt (P 1) und an einem zweiten Punkt (P 2) der Strecke (6) stromabwärts des Kraftfahrzeugs (1) durch Meldung an den zweiten Punkt), die Richtung) (P2) umfassen;
- Computer (5), der konfiguriert ist, um in den von der Navigationsvorrichtung (4) gelieferten Daten eine Änderung des Streckentyps von dem ersten Streckentyp (t1) an dem ersten Punkt (P1) zu einem zweiten Streckentyp (t2) an dem zweiten Punkt (P2) zu erfassen;
- wobei der Computer ferner konfiguriert ist, um, wenn dieser Computer (5) die Änderung erfasst, eine präventive Warnung zum Deaktivieren der Fahrerassistenzvorrichtung (3) zu erzeugen, wenn sich das Kraftfahrzeug (1) in einer Strecke (7) einer vordefinierten vorgelagerten Länge befindet, indem er die Bewegungsrichtung des Kraftfahrzeugs (1) von dem zweiten Punkt (P2),
in dem die Entfernung zwischen dem Kraftfahrzeug (1) und Der erste Punkt (P1) ist dem ersten Streckentyp (t1) zugeordnet, wobei eine Geschwindigkeitsbegrenzung für die Bewegungsstellung des Kraftfahrzeugs (1) Kraftfahrzeug gilt.

2. System (2) nach Anspruch 1, wobei die Länge der vorhergehenden Strecke (7) mit einer Geschwindigkeitsbegrenzung verbunden ist, die auf die Position des Kraftfahrzeugs (1), die Bewegungsgeschwindigkeit des Kraftfahrzeugs (1), den ersten Straßentyp (t1), auf Daten bezüglich des Kraftfahrzeugs (1) und/oder auf Daten bezüglich klimatischer Bedingungen am ersten Punkt (P1) und/oder am zweiten Punkt (P2) der Straße (6) anwendbar ist.

3. System (2) nach Anspruch 1, wobei der Abstand zwischen dem ersten Punkt (P1) und dem zweiten Punkt (P2) mit dem ersten Typ des vorhergehenden, mit einer Geschwindigkeitsbegrenzung, die auf die Position des Kraftfahrzeugs (1) anwendbar ist, und/oder mit der Bewegungsgeschwindigkeit des Kraftfahrzeugs (1) assoziiert ist.

4. System (2) nach einem der vorhergehenden Ansprüche, wobei der Straßenabschnitt (7) zumindest teilweise von dem ersten Straßentyp (t1) ist.

5. System (2) nach einem der vorhergehenden Ansprüche, wobei die vorbeugende Warnung eine Aufforderung zur Wiederaufnahme des manuellen Fahrens des Kraftfahrzeugs (1) umfasst.

6. System (2) nach einem der vorhergehenden Ansprüche, wobei die vorbeugende Warnung eine verbleibende Strecke, die in dem Streckenabschnitt (7) zurückzulegen ist, und/oder eine verbleibende Strecke, die zurückzulegen ist, um sich dem zweiten Punkt (P2) der Strecke (6) zu nähern, umfasst.

7. Kraftfahrzeug (1), umfassend das präventive Warnsystem (2) nach einem der vorhergehenden Ansprüche.

## Claims

1. System (2) for detecting a change in the type of route on which a motor vehicle (1) is travelling, this system (2) comprising:
- a driving aid device (3) capable of at least partially controlling the movement of the motor vehicle (1), this driving aid device (3) being associated with a first type of route (6);
- a navigation device (4) capable of providing, for a position of the motor vehicle (1) on a route (6), data comprising a type of route (6) at a first point (P 1) and at a second point (P 2) of the route (6) in downstream of the motor vehicle (1) by report to the second point), the direction) (P2);
- a computer (5) configured to detect, in the data provided by the navigation device (4), a change in the type of route from the first type of route (t1) at the first point (P1) to a second type of route (t2) at the second point (P2);
- the computer being, in addition, configured to generate, when this computer (5) detects said change, a preventive warning for deactivating the driver assistance device (3) when the motor vehicle (1) is in a stretch (7) of route of predefined upstream length, by report to the direction of movement of the motor vehicle (1), from the second point (P2),
in which the distance between the motor vehicle (1) and the first point (P1) is associated with the first type of route (t1), with a speed limitation applicable to the position of movement of the motor vehicle, (1) motor vehicle.

2. System (2) according to claim 1, wherein the length of said previous stretch (7) is associated with a speed limitation applicable to the position of the motor vehicle (1), to the speed of movement of the motor vehicle (1), to the first type of road (t1), to data relating to the motor vehicle (1), and/or to data relating to climatic conditions at the first point (P1) and/or at the second point (P2) of the road (6).

3. System (2) according to claim 1, wherein the distance between the first point (P1) and the second point (P2) is associated with the first type of previous, with a speed limitation applicable to the position of the motor vehicle (1), and/or with the speed of movement of the motor vehicle (1).

4. System (2) according to any one of the previous claims, wherein the section (7) of road is at least partially of the first type of road (t1).

5. System (2) according to any one of the previous claims, wherein the preventive warning comprises an invitation to resume manual driving of the motor vehicle (1).

6. System (2) according to any one of the previous claims, wherein the preventive warning comprises a remaining distance to be covered in the route section (7) and/or a remaining distance to be covered to approach the second point (P2) of the route (6).

7. Motor vehicle (1) comprising the preventive warning system (2) of any one of the previous claims.
